# EUROPÄISCHE PATENTSCHRIFT

(11) **EP 1 554 079 B1**
(45) Veröffentlichungstag und Bekanntmachung des Hinweises auf die Patenterteilung: **03.05.2006**
(21) Anmeldenummer: 03750227.5
(22) Anmeldetag: 17.10.2003
(51) Int. Cl.: B23Q 7/04, B23K 26/00

(54) **SPANNVORRICHTUNG FÜR LÄNGLICHE WERKSTÜCKE IN EINER LASERSTRAHLMASCHINE**
CLAMPING DEVICE FOR LONG WORKPIECES IN A LASER BEAM MACHINE
DISPOSITIF DE SERRAGE POUR DES PIECES ALLONGEES SITUEES DANS UNE MACHINE D'USINAGE PAR LASER

(30) Priorität: 17.10.2002 US 419276 P
(43) Veröffentlichungstag der Anmeldung: 20.07.2005
(73) Patentinhaber: Bystronic Laser AG, CH-3362 Niederönz (CH)
(72) Erfinder: HORISBERGER, Alfred, CH-4922 Bützberg (CH)
(74) Vertreter: Frauenknecht, Alois J.
(86) Internationale Anmeldenummer: PCT/CH2003/000679
(87) Internationale Veröffentlichungsnummer: WO 2004/035258

(56) Entgegenhaltungen:
- CH-A- 677 332
- DE-A- 3 504 713
- FR-A- 2 587 926

## Beschreibung

Die vorliegende Erfindung bezieht sich auf eine Laserstrahl-Bearbeitungsmaschine, kurz Lasermaschine genannt, gemäss dem Oberbegriff des Patentanspruchs 1.

Längliche Werkstücke, insbesondere Rohre, Stäbe, Flach- und Hohlprofile werden in geeigneten Lasermaschinen durch ein Spannfutter geschoben und an ihrem freien Ende mittels einem Laserstrahl geschnitten und/oder geschweisst. Oft werden die Werkstücke an ihrem freien Ende unterstützt, damit sie nicht durchhängen oder sich bei der Bearbeitung durchbiegen. Diese notorisch bekannten Spannfutter haben den Nachteil, dass sie lediglich für kreiszylindrische Werkstücke geeignet sind; Profile bzw. asymmetrische Werkstücke können damit nicht präzise gefasst werden.

Es ist daher Aufgabe der Erfindung eine universell einsetzbare Vorrichtung zu schaffen, die beliebig geformte, längliche Voll- und Hohlprofile während der Laserbearbeitung sicher fassen kann. Die Vorrichtung soll für automatisierte Bearbeitungsabläufe geeignet sein und sich durch kurze Spann- und Umrüstzeiten auszeichnen.

Diese Aufgabe ist durch die Merkmale des Anspruchs 1 gelöst.

In abhängigen Ansprüchen sind bevorzugte Weiterbildungen des Erfindungsgegenstandes beschrieben.

Die im Anspruch genannte Trägerplatte lässt sich durch einen Linearantrieb vertikal verschieben, so dass je nach dem Profil oder der Form des Werkstücks die am besten geeignete Spannvorrichtung zum Einsatz gelangen kann.

Besonders bewährt haben sich pneumatisch betätigte Spannvorrichtungen, die zudem selbstzentrierend wirken, gemäss Anspruch 3.

Einander gegenüberliegende, paarweise angeordnete Spannbacken, welche gemäss Anspruch 4 gemeinsam betätigt werden, erleichtern das Spannen und bewirken die gewünschte Selbstzentrierung von Profilen.

Platzsparend sind Doppelkolben, die in einem Futterkörper angeordnet sind und Spannringe, die sich gegenüber diesem verdrehen, siehe Anspruch 5.

Die radiale Verschiebung der Spannbacken erfolgt kinematisch günstig durch in diesen eingelassene Keilflächen, Anspruch 6.

Besonders rasch lassen sich die Spannbacken in Spann-Nuten in seitlichen Verzahnungen auf das gewünschte Mass einstellen, vgl. Anspruch 7.

Die in Anspruch 8 aufgezeigte Ausführungsform erlaubt die Energieversorgung der Spannvorrichtung auch bei deren Rotation.

Die zweite Spannvorrichtung ist bevorzugt maschinenfest angeordnet, Anspruch 9, so dass sich die Einstellzeiten reduzieren, weil nur die obere, erste Spannvorrichtung vertikal zu verfahren ist.

Bewährt haben sich zur Führung von Rundkörpern wie Wellen, Rohre etc. aus den Oberflächen der zweiten Spannvorrichtung herausragende Gleitstücke, beispielsweise Kugelkalotten; Anspruch 10.

Nachfolgend werden an Hand von Zeichnungen Ausführungsbeispiele der Erfindung erläutert.

Es zeigen:
- Fig. 1: einen Ausschnitt aus einer Lasermaschine mit erfindungsgemässen Spannvorrichtungen,
- Fig. 2: Teile der in Fig. 1 gezeigten oberen Spannvorrichtung mit ihren Antriebskolben und der zugehörigen Kraftübertragung,
- Fig. 3: die Darstellung gemäss Fig. 2 in Ansicht von der Gegenseite,
- Fig. 4: eine Draufsicht auf eine Spannvorrichtung Fig. 2 und 3, in einer Teilschnitt-Darstellung,
- Fig. 5: eine Schnittdarstellung in der Längsachse durch die Spannvorrichtung Fig. 4 und
- Fig. 6: eine bevorzugte Ausführungsform eines pneumatischen Antriebs einer Spannvorrichtung.

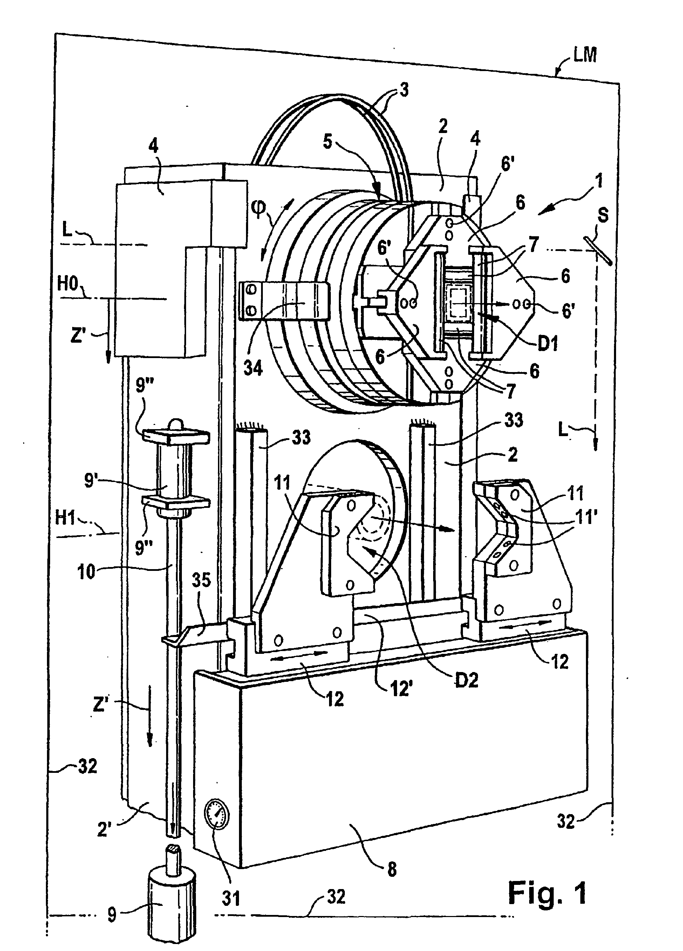

In Figur 1 ist eine vereinfacht dargestellte Lasermaschine mit LM bezeichnet. Der Laserstrahl L ist in bekannter Weise über eine Strahlführung und über Umlenkspiegel S in den Bearbeitungsraum der Maschine geführt. Auf einer Trägerplatte 2 befindet sich eine obere Spannvorrichtung 1 für Profile; die notwendige Energiezufuhr für die Spannvorrichtung erfolgt über Druckluftschläuche 3.

Die Trägerplatte 2 ist seitlich durch Führungsflansche 4 und vorne durch auf ihr aufgeschweisste Führungsschienen 33 gleitfähig gehalten und in Richtung Z' vertikal verschiebbar. Die Spannvorrichtung 1 besteht im Wesentlichen aus Spannbacken 6 mit Rollen 7, welche drehbar über entsprechende Ringe auf der Trägerplatte 2 angeordnet sind. Die Spannbacken 6 sind leicht auswechselbar und mit Befestigungsschrauben 6' auf ihren Grundkörpern fixiert. Die Durchlässe für die Werkstücke sind mit D1 bzw. D2 bezeichnet.- Im Durchlass D1 ist ein Vierkant-Hohlprofil angedeutet; im Durchlass D2 ein Rohr. Die Verschiebewege dieser Rohmaterialien erfolgen in Pfeilrichtung über eine hinter der Spannvorrichtung angeordneten Beschickung (Handling System). Die Führungsschienen 33 sind durch ein Schutzwinkel 35 gegenüber groben Verschmutzungen und Beschädigungen durch abprallende Werkstücke und ausgeschnittene Teile geschützt.

Die gesamte Spannvorrichtung 1 ist rotationsfähig ausgeführt, was durch einen mit ϕ bezeichneten Pfeil charakterisiert ist. Dieser Drehwinkel ϕ, in Bezug auf seine Referenzlage wird laufend durch einen Positionsgeber 34 überwacht und an eine an sich bekannte NC-Steuerung in der Lasermaschine gemeldet.

Im unteren Bereich der Trägerplatte 2 befindet sich auf dem unteren Teil des Maschinenständers 32 ein Horizontalträger 8, auf dem ein sogenannter Lünettenträger 12 mit Lünetten 11 und eingelagerten Kugeln 11' horizontal verschieblich auf einer Führungsschiene 12' aufgebaut ist. Die Verschiebewege der Lünettenträger 12 sind durch Doppelpfeile aufgezeigt. Stirnseitig ist im Träger 8 ein Manometer 31 eingelassen, welches zur Überwachung des optimalen Eingangsdrucks der Druckluft und damit des Spanndrucks von hier nicht sichtbaren, steuerbaren Pneumatikzylindern dient. Die Kraftübertragung von den Pneumatikzylindern zu den Lünettenträgern 12 erfolgt über ebenfalls verdeckte Kolbenstangen.

An der Trägerplatte 2 befinden sich seitlich angeordnet, einander gegenüberliegende Winkel 2', welche der Vertikalverstellung dienen. Ersichtlich ist im mittleren Teil des vorderen Winkels 2' ein Gegenlager 9' mit Trägern 9" eines über eine Schubstange 10 wirkenden elektromechanischen Linearantriebs 9. Dieser Antrieb 9 vermag die obere, erste Spannvorrichtung von ihrer Ausgangslage H0 in die Arbeitslage H1 nach unten zu verfahren. Der Verschiebeweg ist als Pfeil markiert und mit Z' bezeichnet.

In nachfolgenden Figuren sind gleiche Funktionsteile mit gleichen Bezugsziffern versehen.

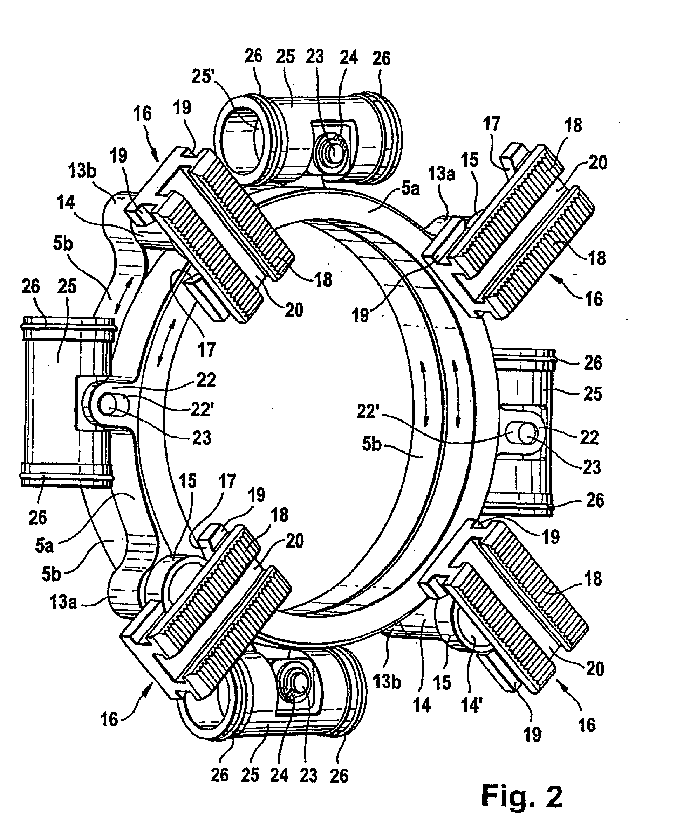

Die in Fig. 1 ersichtlichen Spannringe 5 bestehen gemäss Fig. 2 aus einem ersten Ring 5a und einem zweiten Ring 5b. Der Ring 5a bewirkt eine Verstellung von einander gegenüberliegend angeordneten Grundbacken 16; der Ring 5b die Verstellung der - hier horizontal liegenden - Backen 16. Beide Ringe 5a und 5b sind unabhängig voneinander drehbar und weisen je vier zueinander um einen Zentriwinkel von 90° versetzte Rollenträger 13a bzw. 13b auf, in denen Rollachsen-Träger 14 mit endseitigen Rollen 15 eingesetzt sind.

Die Rollen 15 liegen mit ihrem Aussenring in Grundbacken 16 eingelassenen Keilflächen 17 auf. Zwischen den jeweiligen Rollenträgern 13a resp. 13b ragen Nocken 22 mit Ausnehmungen 22' heraus, in welchen Kolbenbolzen 23 durch axial verschiebliche Doppelkolben 25 hindurchgeführt sind. Gesichert sind diese Kolben 25 jeweils auf der vom Ring 13a bzw. 13b abgewandten Seite mit üblichen Sicherungsringen 24, sogenannten "Seegerringen". Damit die Ringe 5a und 5b ihre Drehbewegung ausführen können sind die Ausnehmungen 22' als Langlöcher gestaltet.

Die Grundbacken 16 besitzen eine stirnseitige, zentrale Spann-Nut 20 und seitliche Verzahnungen 18.

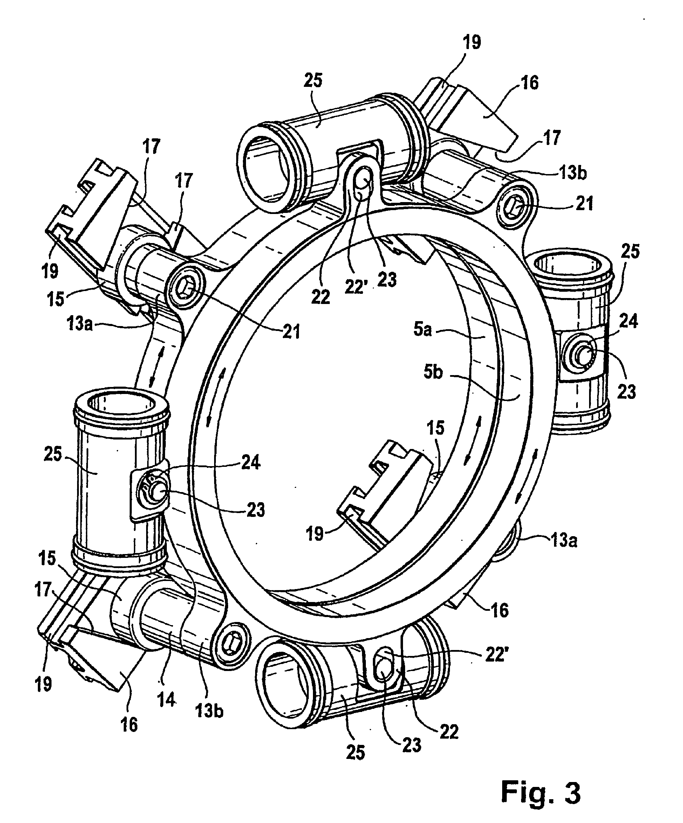

Figur 3 zeigt die vorstehend beschriebene Anordnung von ihrer'Gegenseite. Gut ersichtlich sind hier die Keilflächen 17 und seitliche Nuten 19 in den Grundbacken 16, welche das Aufspannen (Festschrauben) der Spannbacken 6 erleichtern. Ebenfalls sieht man die Rollen 15 in den eingelassenen Keilflächen 16, sowie die Verschraubung der Rollenachsen-Träger 14. Um den Kolben 25 eine Linearbewegung zu ermöglichen und um diese in eine Rotationsbewegung der Ringe 5a und 5b umsetzen zu können, wirken hier wiederum die Kolbenbolzen 23 in Ausnehmungen 22' (Langlöcher) der Nocken 22.

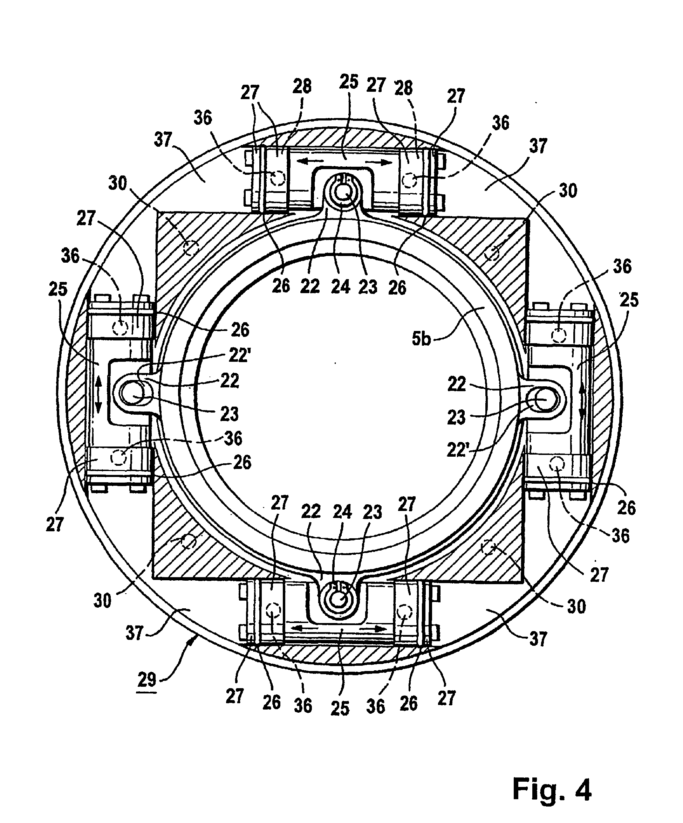

Die Draufsicht Fig. 4 zeigt die gleiche Anordnung, ebenfalls bei abgenommenen äusseren Abdeckring, jedoch aufgesetzt auf einen Futterkörper 29 und teilweise geschnitten. Zusätzlich sind hier Zylinderdeckel 27, welche die Kolben 25 dicht umschliessen. Die Zylinderdeckel 27 bilden einen Teil des Zylinderraums 28, sie sind mittels Positionierringen 26 in einer Bohrung 37 im Futterkörper 29, Fig. 4, in ihrer Lage definiert eingesetzt und führen die Doppelkolben 25. Rückseitig weisen die Kolben 25 je zwei Anschlüsse für die Druckluft auf, wobei diese Anschlüsse in Durchgangsbohrungen 36 im Futterkörper 29 münden und durch abgedichtete Flansche mit Hohlräumen über die Druckluftschläuche 3 mit Energie versorgt werden. Aufgeschraubt ist der Futterkörper 29 über Zentrierbohrungen 30 mit Befestigungsschrauben auf einer nicht dargestellten angetriebenen Hohlwelle.

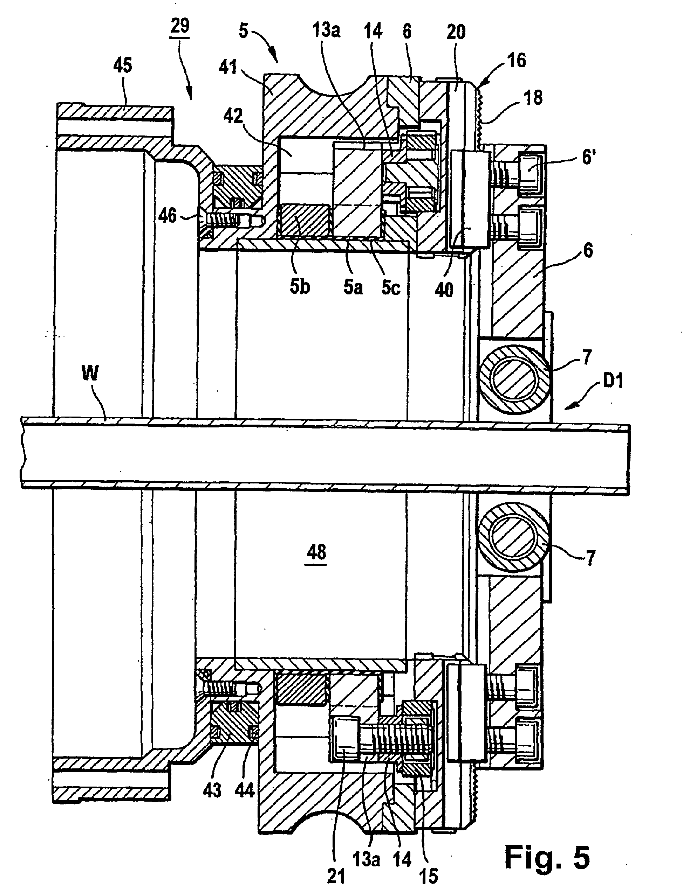

Der Längsschnitt nach Fig. 5, entlang eines Werkstücks W zeigt die Ausführungsform eines Antriebsflansches 45, auf welchen ein an sich bekannter Zahnkranz einwirkt und die Drehbewegung um den Winkel ϕ ermöglicht. Der eigentliche Futterkörper 29 zeigt den Zylinderflansch 5 mit seinen 1. und 2. Verstellringen 5a und 5b mit ihren Rollenträgern 13a, vgl. Fig. 2 und Fig. 3. Die Rollen 15, auf Rollenachsen 14 gelagert sind durch eingelassenen, versenkte Innensechskant-Schrauben 21 in den Rollenträgern festgeschraubt. Die Rollen 15 sind nach Art von Wälzlagern aufgebaut. Die Verstellringe 5a und 5b sind in einem Führungsring 5c aus Gleitmaterial gelagert und geführt.

Ferner ist der Aufbau der Spannbacken 6 ersichtlich: Vor der Spann-Nut 20 liegt eine Grundbacke 16 mit einer feinen Verzahnung 18 in welche eine Gewindeplatte 40 einrastet. durch Schrauben 6' sind die Spannbacken 6 mit ihren Rollen 7 aufgesetzt und lassen sich, entsprechend den Abmessungen des Werkstücks W einstellen, so dass die Spannwege klein sind. Dadurch kann Stangenmaterial automatisch nachgeschoben und in der vorbestimmten Länge wieder gespannt werden. Zur Dämpfung von Schwingungen dient ein Dämpfungsring 43 mit eingelegten elastischen Ringen 44, welche durch Schrauben 46 geklemmt sind Der ringförmige Hohlraum 48 ist für grosse Durchlassweiten ausgelegt; das Futter 29 erlaubt das sichere spannen beliebiger Profile.

Die Funktionsweise einer Spannvorrichtung gemäss Fig. 2 bis 5 ist folgende:

Entsprechend dem zu spannenden Profil (Werkstück/Rohling) werden die Spannbacken 6 auf den Grundbacken 16, mit Spiel gegenüber dem Profil festgeschraubt. Durch Zuführung von Druckluft (gesteuert über die NC-Programmierung) werden die Druckluftschläuche 3 mit Druckluft versorgt und beaufschlagen Kolbenböden 25' (Fig. 2), so dass sich die Spannvorrichtung schliesst, d.h. die Spannbacken 6 fassen das Profil mit einer Kraft von zirka 60 kg pro Backe. Der Kraftfluss ist leicht ersichtlich; je zwei gegenüberliegende Doppelkolben 25 bewegen den Ring 5a und/oder 5b, so dass die Rollen 15 in den Keilflächen 16 abrollen und sich dadurch die Grundbacken 16 in ihren, im äusseren Futterkörper 29 eingelassenen, seitlichen Nuten 19 radial verschieben.

Die dargestellte Ausführungsform erlaubt sehr kurze Spann-und Öffnungszeiten, so dass die Vorrichtung eine erhöhte Bearbeitungskadenz der Lasermaschine erlaubt.

Die zweite Spannvorrichtung 11, 11', 12, vgl. Fig. 1 arbeitet ähnlich einer an sich bekannten Lünette und ist für rotationssymmetrische Werkstücke vorgesehen. Sie ist ebenfalls pneumatisch betätigt und kann leicht von ihrem Vertikalträger entfernt werden, wenn sie die erste Spannvorrichtung im Einsatz ist und stören könnte.

Die Arbeitslage H1 lässt sich an das zum Einsatz gelangende "Handling-System" oder an die Form der Werkstücke anpassen.

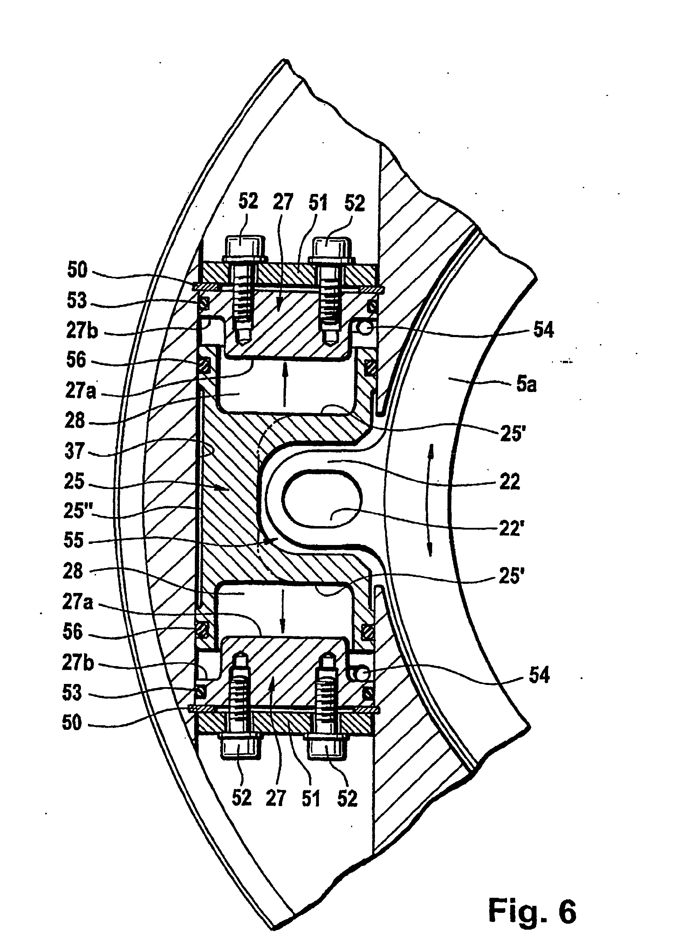

In Fig. 6 ist ein bevorzugtes Ausführungsbeispiel eines Pneumatikzylinders mit Doppelkolben 25 in der Bohrung 37 dargestellt. Im zentralen Bereich ist der Doppelkolben 25 durch eine Ausdrehung mit einem Ringraum 25" versehen und somit nur auf beiden Seiten geführt. Randseitig sind zudem Dichtringe 56 (O-Ringe) vorgesehen, die den Kolben 25 in seiner Bohrung 37 abdichten. Zylinderdeckel 27, jedoch hier mit einem vorstehenden Zapfen 27a können durch die Kolbenbewegung bis zu einem Anschlag 27b angefahren werden. Die Zylinderdeckel 27 besitzen ihrerseits periphere Dichtringe 53 (O-Ringe) und sind kraftschlüssig an Sicherungsringen 50 (Innen-Seegerringe) gehalten. Hierzu dienen Flansche 51 die mit Schrauben 52 die Zylinderdeckel 27 stationär fixieren.

Die resultierenden Zylinderräume sind mit 28 bezeichnet und werden über den Zapfen 27a zugeordnete Lufteinlässe 54 mit Druckluft versorgt. Im Zentrum des Doppelkolbens 25 ist eine - dem Betrachter zugewandte - Aussparung 55 zu sehen, in der ein mit dem zweiten Ring 5a verbundener Nocken 22 in Kreisrichtung (durch Pfeile charakterisiert) bewegbar ist. Der hier nicht eingezeichnete Kolbenbolzen ist ebenfalls in einer Ausnehmung 22', einem Langloch, seitlich geführt.

In gleicher Weise sind sämtliche vier Doppelkolben ausgeführt. Gegenüber der in Fig. 4 dargestellten Ausführungsform ergibt die Variante nach Fig. 6 eine bessere Ausnutzung des zur Verfügung stehenden Raums und damit höhere Verschiebe- bzw. Spannkräfte.

Der ersten Spannvorrichtung 1 ist ein konventioneller Antrieb (Zahnkranz mit Servomotor) zugeordnet, so dass sich die Werkstücke mit dem Laserstrahl L im vollen Umfang vom zugeführten Profil abtrennen (schneiden) lassen. Die Drehzahl der Spannvorrichtung 1 kann kurzzeitig auf mehrere hundert Umdrehungen pro Minute hochgefahren werden, so dass auch ausgeschnittene Teile aus dem Werkstück durch Zentrifugalkräfte herausgeschleudert werden.

Durch die Wahl der zur Laserbearbeitung optimal geeigneten Spannvorrichtung lassen sich die Be- und Entladezeiten der Maschine reduzieren. Ebenfalls kann die Umrüstzeit von einem Werkstücktyp zu einem anderen beträchtlich reduziert werden.

Der Erfindungsgegenstand könnte auch mehrere und/oder auswechselbare Spannvorrichtungen umfassen, die auch über eine Kreisscheibe an Stelle einer Trägerplatte zuschaltbar sind.

### Bezeichnungslliste

- 1: Spannvorrichtung für Profile
- 2: Trägerplatte (vertikal verschieblich)
- 2': Winkel an 2
- 3: Druckluftzuführung / Schläuche
- 4: Führungsflansch zu 2'
- 5: Zylinderflansch mit Futterkörper
- 5a: 1. Verstellring
- 5b: 2. Verstellring
- 5c: Führungsring / Gleitflächen
- 6: Backen / Spannbacken
- 6': Befestigungsschrauben für 6
- 7: Rollen
- 8: Horizontalträger
- 9: Linearantrieb (elektromechanisch)
- 9': Gegenlager
- 9": Träger von 9'
- 10: Schubstange
- 11: Backen / Lünette
- 11': Gleitstücke / Kugeln in 11
- 12: Lünettenträger
- 12': Führungsschiene
- 13a,13b: Rollenträger
- 14: Rollachsen-Träger
- 15: Rollen
- 16: Grundbacken
- 17: Keilflächen in 16
- 18: Verzahnung
- 19: Seitliche Nuten in 16
- 20: Spann-Nut
- 21: Verschraubung von 14 (Innensechskant)
- 22: Nocken
- 22': Ausnehmung in 22 (Langloch)
- 23: Kolbenbolzen
- 24: Sicherungsring mit Unterlegscheibe
- 25: Doppelkolben (pneumatisch)
- 25': Kolbenboden
- 25": Ringraum (Ausdrehung)
- 26: Positionierring
- 27: Zylinderdeckel
- 27a: Zapfen von 27
- 27b: Anschlag von 27
- 28: Zylinderraum
- 29: Futterkörper
- 30: Zentrierbohrungen / Bohrungen für Befestigungsschrauben
- 31: Manometer (Druckluft)
- 32: Maschinenständer / Ständer
- 33: Führungsschienen
- 34: Positionsgeber
- 35: Schutzwinkel
- 36: Durchgangsbohrungen
- 37: Bohrung (Zylinderraum)

- 40: Gewindeplatte
- 41: Schnittfläche (Querschnitt)
- 42: Ausnehmung für Zylinder 25
- 43: Dämpfungsring
- 44: elastische Ringe
- 45: Antriebsflansch
- 46: Schraube

- 48: Hohlraum

- 50: Sicherungsring (Innen-Seegerring)
- 51: Flansch
- 52: Schrauben mit Sicherungscheiben
- 53: Dichtring (O-Ring)
- 54: Lufteinlass (Druckluft)
- 55: Aussparung
- 56: Dichtring (O-Ring)

- D1: Durchlass mit Führungsrollen
- D2: Durchlass mit Lünette
- L: Laserstrahl
- LM: Lasermaschine
- H0: Ausgangslage
- H1: Arbeitslage / Arbeitsposition
- S: Umlenkspiegel
- W: Werkstück
- Z': Verschiebeweg von 2 (Hilfsachse)
- ϕ: Drehwinkel von 1

## Patentansprüche

1. Werkzeugmaschine zur Bearbeitung von länglichen Werkstücken mittels Laserstrahlen, insbesondere von Rohren, Stäben, Flach- und Hohlprofilen, wobei die Werkstücke während der Laserstrahlbearbeitung in einer Spannvorrichtung (1,11,12) zumindest partiell umschlossen, eingespannt oder gelagert sind, **dadurch gekennzeichnet, dass** eine erste Spannvorrichtung (1) vorwiegend für Stäbe und Profile und eine zweite Spannvorrichtung (11,12) vorwiegend für Werkstücke aus Rundmaterial vorgesehen ist und dass diese Spannvorrichtungen (1 bzw. 11,12) in einer Vertikalebene verschieblich und wahlweise zuschaltbar sind.

2. Werkzeugmaschine nach Anspruch 1, **dadurch gekennzeichnet, dass** eine höhenverstellbare, vertikal angeordnete Trägerplatte (2) vorgesehen ist, welche zwei horizontale Durchlässe (D1,D2) aufweist, dass die Spannvorrichtungen (1;11,12 auf der Trägerplatte (2) angeordnet sind, dass die Trägerplatte (2) an Führungsflanschen (4) und an Führungsstäben (33) gleitfähig gehalten ist und an dass an dieser Trägerplatte (2) wenigstens eine Schubstange (10) eines am Grundgestell der Werkzeugmaschine (LM,32) angeordneten Linearantriebs (9,9',10) angreift, der die Durchlässe (D1 resp. D2) auf die jeweilige Bearbeitungshöhe (H1) des Werkstücks einstellt.

3. Werkzeugmaschine nach Anspruch 1, **dadurch gekennzeichnet, dass** die Backen (6,6';11) der beiden Spannvorrichtungen (1;11,12) pneumatisch betätigt und selbstzentrierend sind.

4. Werkzeugmaschine nach Anspruch 3, **dadurch gekennzeichnet, dass** die erste Spannvorrichtung (1) einen ersten Spannring (5a) zur paarweisen Verstellung von einander gegenüberliegenden vertikalen Spannbacken (6) und einen zweiten Spannring (5b) zur Verstellung von einander gegenüberliegenden horizontalen Spannbacken (6) aufweist.

5. Werkzeugmaschine nach Anspruch 4, **dadurch gekennzeichnet, dass** die Spannringe (5a,5b) über in einem Futterkörper (29) angeordneten Doppelkolben (25) verdrehbar sind.

6. Werkzeugmaschine nach einem der Ansprüche 3 oder 4, **dadurch gekennzeichnet, dass** in Grundbacken (16), welche die Spannbacken (6) tragen, Keilflächen (17) eingelassen sind, in denen Rollen (15) lagern und welche Drehbewegungen der Spannringe (5a,5b) in orthogonale Spannbewegungen umsetzen.

7. Werkzeugmaschine nach wenigstens einem der Ansprüche 3 bis 6, **dadurch gekennzeichnet, dass** die Grundbacken (16) auf ihrer Vorderseite je eine Spann-Nut (20) und zwei Reihen Verzahnungen (18) aufweisen.

8. Werkzeugmaschine nach Anspruch 1, **dadurch gekennzeichnet, dass** die Spannvorrichtung (1) Druckluftzuführungen (3) aufweist, welche in zueinander durch Ringdichtungen abgedichteten Flanschen (29) mit Hohlräumen münden und über Durchgangsbohrungen (36) die Kolben (25) speisen und dass die Spannvorrichtung (1) mit einem Antrieb versehen um wenigstens einen Drehwinkel (ϕ) von 360° drehbar ist.

9. Werkzeugmaschine nach Anspruch 1, **dadurch gekennzeichnet, dass** die zweite Spannvorrichtung (11,12) maschinenfest angeordnet ist, und dass diese bei der Benutzung der ersten Spannvorrichtung (1) entweder auf ihre maximale Ausladung ausgefahren oder entfernt ist.

10. Werkzeugmaschine nach Anspruch 9, **dadurch gekennzeichnet, dass** Backen (11) der Spannvorrichtung auf ihrer dem Werkstück zugewandten Oberfläche leicht aus dieser herausragende Gleitstücke (11') aufweisen.

## Claims

1. A machine tool for machining elongate workpieces by means of laser beams, in particular tubes, bars, flat sections and hollow sections, the workpieces being at least partially enclosed, clamped or mounted in a clamping device (1, 11, 12) during the laser-beam machining, **characterized in that** a first clamping device (1) is provided predominantly for bars and sections and a second clamping device (11, 12) is provided predominantly for workpieces produced from round material, and the said clamping devices (1 and 11, 12 respectively) are displaceable in a vertical plane and are capable of being selectively engaged.

2. A machine tool according to Claim I, **characterized in that** a vertically adjustable support plate (2) is provided, which is arranged vertically and which has two horizontal passages **(D1, D2),** the clamping devices (1; 11, 12) are arranged on the support plate (2), the support plate (2) is held in a manner capable of sliding on guide flanges (4) and on guide bars (33), and at least one connecting rod (10) of a linear drive (9, 9', 10), which is arranged on the base stand of the machine tool **(LM,** 32) and which sets the passages (**D1** and **D2** respectively) to the respective machining level (**H1**) of the workpiece, engages on the said support plate (2).

3. A machine tool according to Claim 1, **characterized in that** the jaws (6, 6'; 11) of the two clamping devices (1; 11, 12) are actuated pneumatically and are self-centring.

4. A machine tool according to Claim 3, **characterized in that** the first clamping device (1) has a first clamping ring (5a) for the adjustment of mutually opposed vertical clamping jaws (6) in pairs and a second clamping ring (5b) for the adjustment of mutually opposed horizontal clamping jaws (6).

5. A machine tool according to Claim 4, **characterized in that** the clamping rings (5a, 5b) are capable of being turned by way of double pistons (25) mounted in a chuck member (29).

6. A machine tool according to any one of Claims 3 or 4 **characterized in that** wedge faces (17), in which rollers (15) are mounted and which convert rotational movements of the clamping rings (5a, 5b) into clamping movements at right angles, are formed in base jaws (16) which carry the clamping jaws (6).

7. A machine tool according to at least one of Claims 3 to 6, **characterized in that** the base jaws (16) have one clamping groove (20) and two rows of teeth (18) in each case on their front side.

8. A machine tool according to Claim 1, **characterized in that** the clamping device (1) has compressed-air supply lines (3) which open into flanges (29) sealed off from one another by annular seals and with cavities and which feed the pistons (25) by way of through-bores (36), and the clamping device (1) is provided with a drive so as to be rotatable by at least an angle of rotation (ϕ) of 360°.

9. A machine tool according to Claim 1, **characterized in that** the second clamping device (11, 12) is arranged so as to be fixed with respect to the machine, and when the first clamping device (1) is used the said second clamping device (11, 12) is either extended to its maximum capacity or removed.

10. A machine tool according to Claim 9, **characterized in that** the surface of jaws (11) of the clamping device facing the workpiece have slide members (11') projecting slightly from the latter.

## Revendications

1. Machine-outil pour l'usinage de pièces allongées par faisceaux laser, en particulier de tubes, barres, profilés plats et profilés creux, les pièces étant entourées au moins partiellement, serrées ou montées dans un dispositif de serrage (1, 11, 12) pendant l'usinage par faisceau laser, **caractérisée en ce qu'**un premier dispositif de serrage (1) est prévu principalement pour des barres et profilés et un second dispositif de serrage (11, 12) est prévu principalement pour des pièces en matériau rond, et **en ce que** ces dispositifs de serrage (1 ou 11, 12) sont mobiles dans un plan vertical et commutables sélectivement.

2. Machine-outil suivant la revendication 1, **caractérisée en ce qu'**il est prévu une plaque support (2) réglable en hauteur, disposée verticalement, qui présente deux passages horizontaux (D1, D2), que les dispositifs de serrage (1 ; 11, 12) sont disposés sur la plaque support (2), que la plaque support (2) est maintenue avec une possibilité de glissement sur des brides de guidage (4) et sur des barres de guidage (33) et qu'au moins une tige de poussée (10) d'une commande linéaire (9, 9', 10) disposée sur le bâti de la machine-outil (LM, 32) agit sur cette plaque support (2), laquelle commande règle les passages (D1 ou D2) sur la hauteur d'usinage respective (H1) de la pièce.

3. Machine-outil suivant la revendication 1, **caractérisée en ce que** les mâchoires (6, 6' ; 11) des deux dispositifs de serrage (1 ; 11, 12) sont à commande pneumatique et à centrage automatique.

4. Machine-outil suivant la revendication 3, **caractérisée en ce que** le premier dispositif de serrage (1) comporte un premier anneau de serrage (5a) pour le déplacement par paires de mâchoires de serrage verticales (6) en vis-à-vis mutuel et un second anneau de serrage (5b) pour le déplacement de mâchoires de serrage horizontales (6) en vis-à-vis mutuel.

5. Machine-outil suivant la revendication 4, **caractérisée en ce que** les anneaux de serrage (5a, 5b) peuvent tourner par l'intermédiaire d'un double piston (25) dans un corps de mandrin (29).

6. Machine-outil suivant la revendication 3 ou 4, **caractérisée en ce que** des surfaces cunéiformes (17) sont pratiquées dans des mâchoires de base (16), qui supportent les mâchoires de serrage (6), surfaces cunéiformes dans lesquelles sont logés des rouleaux (15) et qui transforment des mouvements de rotation des anneaux de serrage (5a, 5b) en mouvements de serrage orthogonaux.

7. Machine-outil suivant l'une au moins des revendications 3 à 6, **caractérisée en ce que** les mâchoires de base (16) présentent chacune sur leur côté avant une gorge de serrage (20) et deux rangées de dentures (18).

8. Machine-outil suivant la revendication 1, **caractérisée en ce que** le dispositif de serrage (1) présente des conduites d'arrivée en air comprimé (3), qui débouchent dans des brides (29) avec des espaces creux, étanchéifiées mutuellement par des joints annulaires, et qui alimentent par l'intermédiaire de trous de passage (36) les pistons (25), et que le dispositif de serrage (1) muni d'une commande peut tourner d'au moins un angle de rotation (ϕ) de 360 ° .

9. Machine-outil suivant la revendication 1, **caractérisée en ce que** le second dispositif de serrage (11, 12) est solidaire de la machine, et que ce dernier, lors de l'utilisation du premier dispositif de serrage (1), est soit porté à son écartement maximal ou est retiré.

10. Machine-outil suivant la revendication 9, **caractérisée en ce que** des mâchoires (11) du dispositif de serrage présentent sur leur surface tournée vers la pièce des coulisseaux (11') dépassant légèrement de cette surface.
